# EUROPEAN PATENT SPECIFICATION

(11) **EP 3 762 285 B1**
(45) Date of publication and mention of the grant of the patent: **11.01.2023**
(21) Application number: 19713214.5
(22) Date of filing: 28.02.2019
(51) Int. Cl.: B62M 6/65, B62J 6/00, B62J 6/04, B62M 6/45, B62H 5/08, B62H 5/20

(54) **DEVICE FOR CONTROLLING A PEDAL-ASSISTED BICYCLE, PEDAL-ASSISTED BICYCLE AND BIKE SHARING SYSTEM**
VORRICHTUNG ZUR STEUERUNG EINES PEDALGESTÜTZTEN FAHRRADES, PEDALGESTÜTZTES FAHRRAD UND SYSTEM ZUR GEMEINSAMEN NUTZUNG VON FAHRRÄDERN
DISPOSITIF DE COMMANDE D'UNE BICYCLETTE À PÉDALAGE ASSISTÉ, BICYCLETTE À PÉDALAGE ASSISTÉ ET SYSTÈME DE PARTAGE DE VÉLOS

(30) Priority: 08.03.2018 IT 201800003359; 08.03.2018 IT 201800003362
(43) Date of publication of application: 13.01.2021
(73) Proprietor: ZEHUS S.p.A., 20124 Milano (IT)
(72) Inventor: BERRETTA, Daniele, 20127 Milano (IT); SEGATO, Marcello, 20127 Milano (IT); LISANTI, Paolo, 20127 Milano (IT)
(74) Representative: Zermani Biondi Orsi, Umberto
(86) International application number: PCT/IB2019/051617
(87) International publication number: WO 2019/171223

(56) References cited:
- WO-A1-2017/190195
- CN-A- 105 667 647
- CN-A- 107 472 121
- JP-A- 2006 273 142
- US-A1- 2012 146 429
- US-A1- 2017 066 492

## Description

The present invention regards a device for controlling a pedal-assisted bicycle, preferably a dynamo for bicycles, by way of non-limiting example, a so-called Hub-type dynamo ("Hub Dynamo").

The invention therefore finds particular application in the field of pedal-assisted bicycles, and preferably in bike sharing platforms.

Over the last years, alongside the growing popularity of the sustainable mobility concepts and the continuous development of increasingly performing electric vehicles, there has been an exponential growth of the so-commonly-called e-bikes, i.e. bicycles provided with an electric propulsion system capable of assisting the cyclist when pedalling.

Such bicycles have become popular in city applications, partly replacing scooters, and in more extreme applications, allowing occasional enthusiasts to engage in climbing activities along routes which, without using electric propulsion, would have been out of their reach.

Thus, the aspects on which the companies of the industry have concentrated their efforts the most over the last years have been the implementation dimension, to be minimised so as to make the system also adaptable to "conventional" frames and the battery duration, increased by using the electric vehicle both by means of a motor and a generator.

With reference to the latter aspect, if for "mountain bike" applications the problem related to the duration of the battery is to be considered somehow subordinated, or however constrained, to the need of a major contribution in terms of interlock by the engine, in city applications instead of an actual interlock it becomes necessary to facilitate the cyclist in the most demanding sections and this allowed to consider the maintenance of the state of charge of the battery as primary.

Thus, regarding such developments, the Applicant recently developed a system capable of controlling the electric vehicle so as to maintain the state of charge of the battery at around a predetermined value, without ever having the need (nor the possibility) to recharge it by means of the network. Such system was protected by depositing the international patent application n° PCT/IB2018/050202, incorporated herein for reference. Such control system, absolutely optimal in that it is capable of adapting to the historical bicycle use, however reveals a limit lying in non-proprietary applications, such as for example in a bike sharing system.

This, mainly due to the fact that both the user and the followed routes vary in a substantial and continuous way, basically preventing the system from "learning" the cyclist's riding style and/or to adapt thereto in progress (given the very short time of use typical of the application).

Furthermore, still with reference to bike sharing applications, the currently commonly used bicycles (whether e-bikes or conventional bicycles) are all provided with an anti-theft system that can be easily tampered with, thus considerably reducing the profits of the companies engaged in this type of activity, thus burdening them with an expensive recovery or a costly replacement of the bicycles tampered with.

Still, considering the wide range of users of this type of services, it is not obvious that the cyclist is a person used to move in urban contexts using bicycles, which at times translates into an improper use of the means and into ensuing drawbacks, such as falls, accidents or rear-end collisions. Some prior art devices are known from documents JP2006273142 and US2012146429. JP 2006 273142 A discloses a control device for controlling a pedal-assisted bicycle according to the preamble of claim 1.

Thus, an object of the present invention is to provide a control device and a control method of a pedal-assisted bicycle, as well as a pedal-assisted bicycle as such and a bike sharing system, that are capable of overcoming the drawbacks of the aforementioned prior art. In particular, an object of the present invention is to provide a control device and a control method for a pedal-assisted bicycle that quickens the adaptation thereof to the methods of use of the user, especially in a bike sharing system.

A further object of the present invention is to provide a control system for an optimised pedal-assisted bicycle, that allows the user different riding experiences.

Furthermore, the objects of the present invention include providing a control device for a pedal-assisted bicycle and a pedal-assisted bicycle with greater safety levels.

One or more of said objects are attained by a control device and a control method of a pedal-assisted bicycle, as well as a pedal-assisted bicycle having the technical characteristics of one or more of the subsequent claims.

In particular, said objects are attained by a control device of a pedal-assisted bicycle provided with an electric motor associated with a wheel, at least one battery pack associated with said motor for bidirectionally exchanging energy with it, a pedal-thrust group, a transmission operatively interposed between said pedal-thrust group and at least one wheel and a free-wheel mechanism associated with said at least one wheel.

The device comprises first sensor means configured to detect quantities representing a state of the bicycle, including at least one quantity correlated with the speed of a bicycle wheel and a quantity correlated with the angular velocity of the free-wheel mechanism, and to generate one or more signals representing them.

Sensor means configured to detect the battery pack state of charge and to generate a signal representing the energy consumption of said batteries are also provided.

It should be observed that in the present document the expression "energy consumption of said battery pack" is used to indicate, indistinctively or without any exclusions if not expressly stated, both the instantaneous or average power required/supplied to the battery pack and the state of charge SOC (these are parameters correlated with each other by means of special calculation algorithms).

Alternatively to the above, the "energy consumption of said battery pack" could also be defined as or to indicate the energy used over a determined period, intended as balance between the instantaneous powers over a determined time horizon.

The control device also comprises at least one control unit associated with said sensor means and to said motor and comprising at least one closed loop controller which, in at least one first configuration of an operating mode thereof, is configured to:
determine a state of the bicycle as a function of said signals generated by the first sensor means;
determine, as a function of said state of the bicycle, at least one characteristic curve for driving the motor having a pre-set trend;
drive said electric motor in a first manner, in which it supplies a torque matching the direction of rotation of the wheel, or in a second manner, in which it supplies current to the battery pack, according to said at least one characteristic curve and as a function of said energy consumption of the battery pack.

It should be observed that the control unit (in particular the closed loop controller) is programmed to drive the electric motor so as to pursue a pre-set reference value representing a determined energy recovery level of the battery pack.

In the present document, the expression "determined energy recovery level of the battery pack" is used to define the reference signal tracked by the controller, for example representing the difference (error) between a predetermined reference signal and the power recovered by the battery pack during the course or a recharge level thereof.

According to one aspect of the present invention, the control unit comprises a predictive module configured to receive - from an electronic device (preferably remote) - one or more data related to an energy profile of a user who is about to use the bicycle, wherein said one or more data related to the energy profile of said user are used by said control unit to determine said pre-set reference value and/or the pre-set trend of said characteristic curve.

Thus, as a function of said data received from the predictive module the characteristic curves for driving the motor are adapted and the behaviour of the controller is adapted in at least one initial transient of the course, in which, the available data is most likely not sufficient to have reliable feedback on the energy recovery data of the battery pack. Advantageously, in this manner the control device has an increased speed of adaptation to the behaviour of the user, thus managing to maintain the battery pack state of charge at around an optimal (or reference) value.

It should be observed that said one or more data related to the energy profile of the user preferably comprise a historical recharge level defining an energy consumption historically generated by said user in the battery pack of said bicycle or other bicycles correlated therewith, preferably through the same bike sharing system, also subject of the invention. Advantageously, so that - though in absence of direct knowledge of the user - the control device is capable of predicting the behaviour, hence adapting itself.

More precisely, the characteristic curve for driving the motor comprises (at least for a standing start state of the bicycle) an interlock section, in which it determines an assistance level to be supplied to the cyclist, and at least one recharge section (at least for a cruising state of the bicycle), in which it determines a pre-set energy recovery level to be required of the cyclist.

Preferably, the control unit is used to increase the assistance level and/or reduce the recovery level of the characteristic curve as said historical recharge level increases, and vice versa.

In other words, virtuous users, who have always contributed towards recharging the batteries in the previous courses, even more than required, are awarded with a greater interlock by the motor. On the contrary, any users who consumed batteries more than due, are penalised with a minor contribution by the motor and/or a greater demand for energy contribution (i.e. recharge), where provided.

In other words, the profiling of the user allows finding the best compromise between minor penalisation of the riding experience and maintaining (recovery) the required charge.

A further aspect of the present invention, complementary or alternative to the previous one, is correlated with the presence, in the control unit, of a preliminary setting module (preferably associated with the closed loop controller).

This preliminary setting module is configured to:
- receive - from the user - a piece of information representing an operating configuration of the adjustment device selectable from among an interlocked configuration, in which the motor is mainly driven in said first manner and its level of assistance is maximised for a pre-set time interval or a predetermined covered distance and
   a recharge configuration, in which the interlock level of the motor is substantially null and the motor is driven in said second manner;
- set the pre-set trend of said at least one curve based on the selected configuration.

Preferably, it should be observed that the preliminary setting module is configured to receive from the user a piece of information representing at least one first, one second or one third operating configuration.

The first configuration is hybrid, wherein the assistance level and recovery level are balanced as described up to now.

The second configuration corresponds to said interlocked configuration. The third configuration corresponds to said recharge configuration. Advantageously, in this manner the control unit has different configurations that can be adapted to the needs of the user, who could for example decide to use the bicycle for training purposes, thus without the help of the motor, or, on the contrary, desire or need a greater contribution from the same.

Regarding this, it should be observed that the second configuration (or interlocked configuration) can be preferably set only as concerns battery pack state of charge exceeding a predetermined threshold value.

Furthermore, the control unit is preferably configured to maintain the configuration corresponding to the second configuration for a maximum pre-set time interval, after which the user can evaluate whether or not to adopt the first or the third configuration.

This advantageously allows ensuring that the battery pack state of charge does not drop below a pre-set limit level, thus ensuring the subsequent user to find a useable bicycle at least in the first and in the second configuration.

It should be observed that the control device preferably falls within a context of a system (bike sharing), wherein a display module programmed to display to the user the operating configurations compatible with the battery pack state of charge and to allow the user to select one of said configurations and a transmission module configured to transmit said second information, are provided.

Preferably, the display module is configured to display to the user the operating configurations based on an energy profile of the user.

In other words, the system is configured to display the second configuration, so that it can be selectable and activatable, for "virtuous" energy profiles (i.e. high historical recharge level) only.

Despite serving as an "incentive/award" to ride the bicycle according to principles that allow to recharge the battery even in the presence of interlock sections, such technical characteristic should be deemed strictly technical in that it is directly correlated with a low maintenance demand on the vehicle and an increase of the useful life of the battery.

Another distinctive aspect of the invention, also complementary or alternative to the previous ones, regards the control unit, which is also configured to control the motor according to an anti-theft mode when the bicycle is standstill (decoupled from a user).

In such anti-theft mode, the control unit is configured to control the motor so as to impart a torque contrary to a direction of rotation of the wheel detected by the (first) sensor means.

In other words, in the anti-theft mode the electric motor is at least partly driven as an active brake, actually preventing the motion of the bicycle even in the absence of a padlock or if it is tampered with.

In the anti-theft mode, the control unit can drive the motor in a passive configuration or in an active configuration.

In said passive configuration, the motor does not demand energy from the battery pack and it determines a resistance to advancement at least partly proportional to the speed of the wheel.

On the contrary, in the active configuration the motor is driven so as to impart a torque contrary to a direction of rotation of the wheel detected by the (first) sensor means, and thus demands power/energy from the battery pack.

In the anti-theft mode, the control unit is configured to drive the motor in the passive configuration below a pre-set speed limit, moving on to the active configuration above said limit value.

Thus, in the anti-theft mode the electric motor is driven as a passive brake at low speeds and as an active break only as the advancement speed (or wheel speed) of the bicycle increases. Advantageously, this allows to reduce the energy consumption of the battery pack.

Such aspect of the invention adapts well to a bike sharing system comprising at least one electronic device that can be associated with a user and a plurality of bicycles interconnected to each other through a cloud computing system, in which each bicycle is provided with a control device that can be associated with a user through said electronic device.

In this context, the control unit of each control device is configured to activate the anti-theft mode when the control device is decoupled from the profile of a user.

Advantageously, in this manner the theft or unauthorised movement of the means is much more complex to achieve as compared to what occurs today, thus discouraging criminal attempts not only due to the complexity of tampering with it but mainly due to the substantial impossibility to use the means.

Another aspect of interest to which the present invention refers regards the safety of the cyclists during the course, a particularly crucial issue in bike sharing applications involving cyclists in urban contexts and inexperienced even more so.

According to such aspect of the invention, also complementary or alternative to the previously described ones, the control device comprises an inertial measurement unit configured to measure one or more longitudinal, lateral and vertical accelerations or, alternatively or jointly, one or more from among rolling, pitching and yaw angular velocity of the bicycle, and to generate second signals representing them.

Alternatively, other measurement systems could be used, such as for example an accelerometric triad or a single-axis gyroscope or the like. Besides being associated to the motor so as to drive it, the control unit is also associated with a speed sensor and to the inertial measurement unit. Furthermore, at least one turning indicator device and/or a device signalling that the cyclist is braking constrained to said bicycle, are provided.

Thus, the control unit is preferably configured to receive - from said speed sensor and said inertial measurement unit - respective signals, to process said signals so as to obtain at least one piece of information relating to a braking or turning of the bicycle and send - to said indicator device or to said signalling device - a first signal representing said turning information or a second signal representing said braking information.

Upon receipt of said first and said second signal respectively, the indicator device and the signalling device are configured to emit a light radiation in response.

Advantageously, in this manner the inertial measurement unit allows, if appropriately exploited, to drive the indicators autonomously, thus facilitating the safety of the cyclist and the motorists or other cyclists around them.

A further aspect of the invention is correlated with the structural compactness of the control device, which reveals not only to be high performing (as extensively described up to now), but also has a conformation that is compact and easy to install on bicycle frames, even if not purposely designed.

As a matter of fact, the control device is a dynamo, whose components are fully housed in a containment body that can be integrally joined to a bicycle wheel.

In particular the dynamo preferably comprises a containment body having its own central axis, that can be integrally joined to a bicycle wheel so that said central axis corresponds to a rotation axis of the wheel.

Preferably, the containment body houses:
- the electric motor, capable of alternatively serving as a generator and an engine and comprises a stator and a rotatable rotor around a rotation axis corresponding to said central axis of the containment body;
- the battery pack, extending around said central axis and connected to the electric motor so as to be able to exchange energy with the latter; the battery pack is preferably annular-shaped and arranged around the electric motor;
- (first and second) sensor means associated with said central axis of the containment body and configured to detect quantities representing at least the angular velocity of said wheel and the angular velocity of the free-wheel mechanism;
- the control unit, configured to control the electric vehicle at least according to an operating mode, wherein it acts as a motor or as a generator as a function of the angular velocity of the wheel; such control unit comprises at least one printed circuit board, at least partly annular, coaxial to said central axis of the containment body.

These and other characteristics, alongside the relative technical advantages, will be clearer from the following exemplifying and non-limiting description of a preferred but non-exclusive embodiment of a control device and a control method for a pedal-assisted bicycle, as well as a pedal-assisted bicycle as illustrated in the attached drawings, wherein:

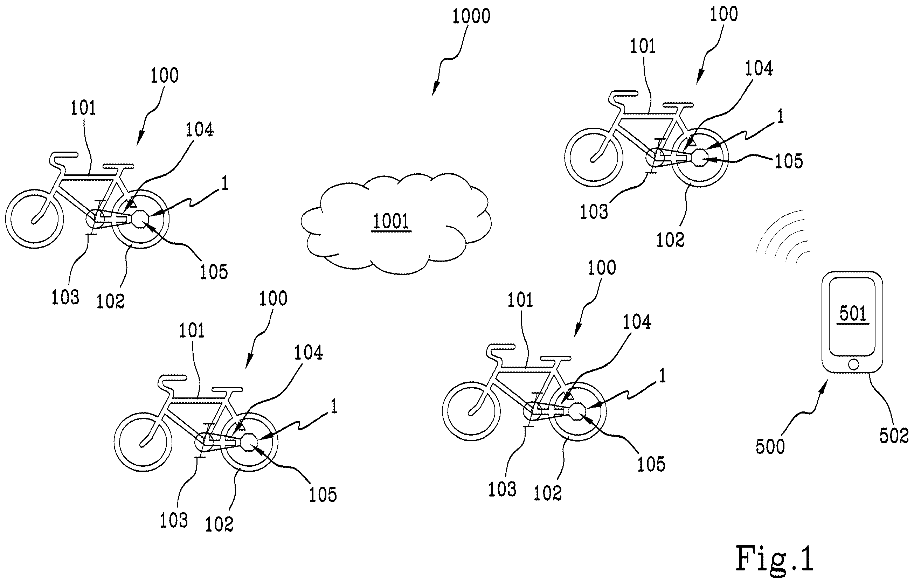

- figure 1 shows a bike sharing system according to the present invention;

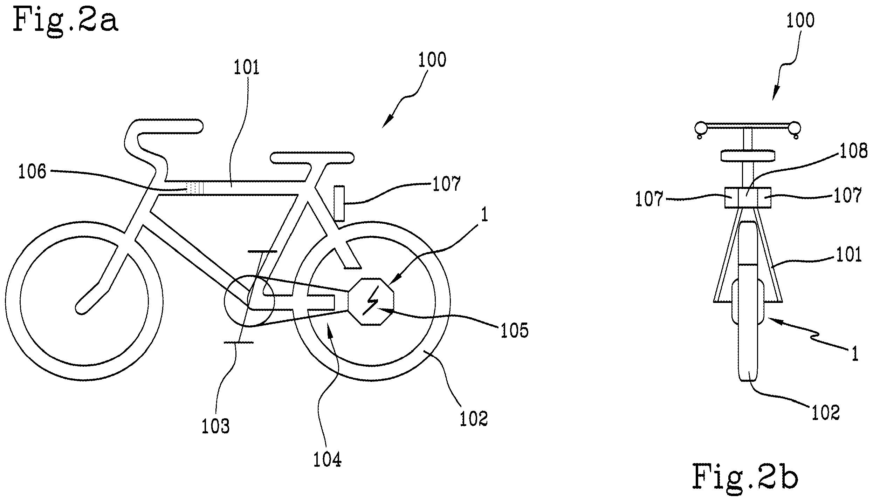

- figures 2a and 2b schematically show - in lateral and rear view - a pedal-assisted bicycle of the bike sharing system of figure 1;

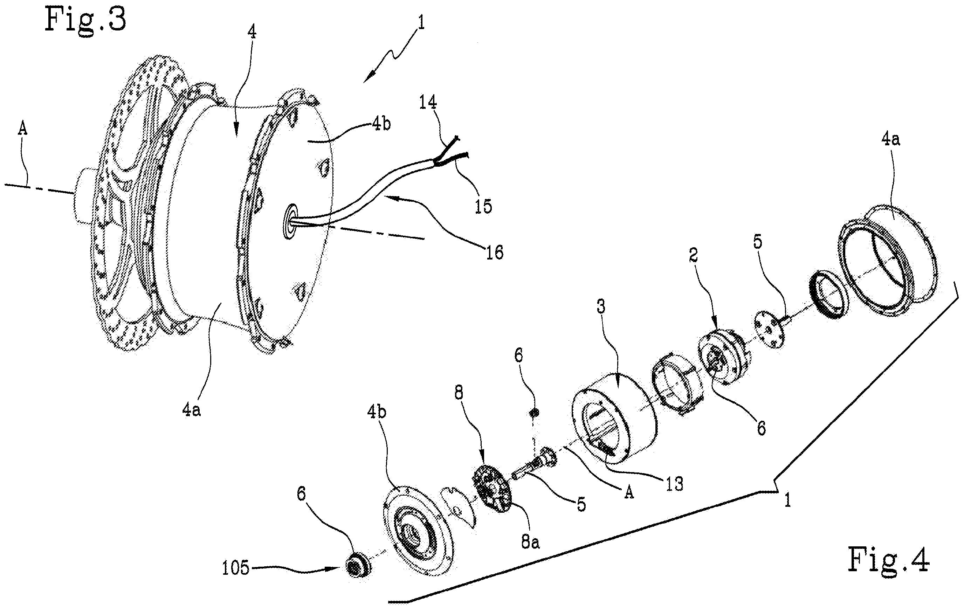

- figure 3 shows a schematic perspective view of a control device for a pedal-assisted bicycle according to the present invention;
- figure 4 shows an exploded view of the control device of figure 3, in which the main components of the device are shown;
- figure 5 shows a logic diagram of the control device of figure 3;
- figure 6 shows a characteristic curve for driving the motor of the control device of figure 5, in different states of update.

With reference to the attached figures, a control device 1 for a pedal-assisted bicycle 100 according to the present invention is indicated with number 1.

Thus, the bicycle 100 comprises a frame 101, two wheels 102, a pedal-thrust group 103 and a transmission system 104 (preferably a chain) for transferring the motion from said pedal-thrust group 103 to one of said wheels 102 (in particular the rear wheel).

Furthermore, a free-wheel mechanism 105 operatively interposed between said transmission system 104 and the wheel 102 is also provided, so as to allow the rotation thereof even when not pedalling.

Preferably, as better described hereinafter, the bicycle 100 is inserted into a bike sharing system 1000.

Thus, the bicycle 100 is associated with a plurality of bicycles 100 similar to it, all (indirectly) interconnected to each other by means of a cloud computing system.

In other words, each bicycle is provided with its own identification code 106 and with a control device 1 configured to be associated with an electronic device 500 of a user/cyclist. Once the user is associated with the bicycle 100 through said electronic device 500, the use thereof is enabled (e.g. by opening a padlock).

More precisely, the electronic device 500 is configured to detect bicycle identification information (e.g. the identification code 106) and send to the cloud computing system a piece of information representing an association of the user (contained in the electronic device 500) to the bicycle 100.

The electronic device 500 is preferably of the active type, comprising a CPU and interface means (e.g. a smartphone), but it could also be of the passive type, such as a card/circuit board for example.

It should be observed that the bicycle 100 is of the pedal-assisted type, which thus comprises an electric motor 2 and a battery pack 3, connected to each other to exchange energy.

Thus, the control device 1 could also be an element different from the motor and the battery pack.

However, the control device 1 is preferably a dynamo, more preferably a dynamo hub, comprising both the electric motor 2 and battery pack 3 therein.

More precisely, the electric motor 2 and the battery pack 3 are housed in a containment body 4 integrally constrained (or that can be constrained) to the wheel 102 to rotate with it.

Thus, such containment body 4 extends around a central axis "A" thereof which, in use, coincides with the rotation axis of the wheel 102.

In other words, the containment body 4 is hub-shaped and has a housing therein, substantially axisymmetric, for containing the components of the device 1.

Structurally, the containment body 4 comprises a drinking-glass-shaped containment portion 4a and a lid 4b which can be integrally coupled to the containment portion 4a.

Thus, the containment portion 4a is provided with a bottom wall from which a substantially cylindrical annular wall delimiting the radial extension of the housing rises.

As mentioned, the electric motor 2 and the battery pack 3, electrically connected to each other so as to exchange energy bidirectionally, are arranged inside the housing (i.e. inside the containment body).

Thus, the electric motor 2 is configured so that it can be driven both as an actuator, wherein it supplies torque to the wheel 102, and as a generator, in which the rotation of the rotor determines a transfer of current towards the battery pack 3, with the ensuing recharge thereof.

In other words, in a first drive manner (actuator) the battery pack 3 supplies energy to the motor 2 so as to allow the latter to generate a drive torque (capable of assisting the cyclist).

On the contrary, in a second drive manner (generator), the motor 2 supplies current to the battery pack 3 so as to recharge it, exploiting the work done by the cyclist or the vehicle (while braking, descending and/or at constant speed) to move it.

Thus, the electric motor 2 comprises a rotor and stator, both coaxial to said central axis "A" of the containment body 4. Preferably, the rotor is coupled to the containment body 4 so as to drive it in rotation (in the first drive manner) or so as to be driven in rotation (in the second drive manner).

On the contrary, the stator is constrained to at least one connection shaft 5, arranged along the central axis "A" and that can be constrained to the frame 101.

Clearly, special bearings interposed between said shaft 5 and the containment body 4 are provided so as to allow the rotation of the containment body 4. It should be observed that said at least one shaft 5 preferably comprises two half-shafts, each associated with one side of the containment body.

With the aim of optimising spaces, the battery pack 3 is substantially annular-shaped and extends around said electric motor 2, in particular around the stator (integrally joined thereto).

Advantageously, this allows reducing the axial overall dimension of the device 1.

It should be observed that the containment body 4 is preferably without any interface/socket for charging the battery pack 3.

More precisely, in a first embodiment the containment body 4 comprises a single power interface 14 suitable to power-supply the external loads connected thereto (lighting, sensors, etc..).

Advantageously, in this manner the device 1, i.e. the dynamo, is of the stand-alone type, not accessible externally without disassembling it.

In the illustrated embodiment, the power interface 14 is defined by a single power supply cable 14a of said loads.

Alternatively, the loads could be of the stand-alone type, power-supplied by special batteries.

The device 1 further comprises sensor means 6 configured to detect the rotation speed of the wheel 102 and to detect the rotation speed of the free-wheel mechanism 105, or a quantity correlated therewith.

Preferably, the first sensor means 6 are configured to directly or indirectly detect the longitudinal speed of the bicycle 100.

Such first sensor means 6 are configured to generate one or more respective signals representing the measured quantities.

Such quantities, if suitably combined, represent a current state of the bicycle (as better clarified hereinafter).

Preferably, such first sensor means 6 comprise a pace sensor (associated with the free-wheel mechanism 105) and a speed sensor (preferably housed in the electric motor 2).

Both sensors 6 are preferably constrained to the containment body 4, preferably inside it.

The presence of second sensor means 7, configured to detect a value representing a battery pack state of charge "SOC" and to generate a signal representing the energy consumption of said battery pack is preferably provided still inside the containment body 4.

It should be observed that in the present document the expression "energy consumption of said battery pack" is used to indicate, indistinctively or without any exclusions if not expressly stated, both the instantaneous or average power required/supplied to the battery pack 3 and the state of charge SOC (these are parameters correlated with each other by means of special calculation algorithms).

Alternatively to the above, the "energy consumption of said battery pack" could also be defined as or to indicate the energy used over a determined period, intended as balance between the instantaneous powers over a determined time horizon.

In the preferred embodiment, such sensor comprises means for detecting the battery voltage and current. Furthermore, in a control unit of the battery pack such signals are processed to determine the battery pack state of charge (SOC) and/or the required/supplied instantaneous power level.

In order to drive the motor 2 and communicate with said sensor means 6, 7, the device 1 further comprises a control unit 8.

From a structural point of view, the control unit 8 preferably comprises a printed circuit board 8a arranged coaxially to said containment body 4. Thus, the control unit 8 is preferably annular-shaped, provided with a central opening fitted on said shaft 5 so as to allow the positioning of the printed circuit board 8. Preferably, the printed circuit board 8a is constrained to the stator of the motor 2.

It should be observed that in a first embodiment the device 1, i.e. the dynamo, comprises a data communication channel 15 associated with said control unit 8 and designed to send a respective signal to one or more loads.

Preferably, in order to make the device 1 even more compact and easier to install, the power interface 14 and the communication channel 15 are housed in a single sheathed cable 16 departing from said central axis "A" of the containment body 4.

In detail, such sheathed cable is to be deemed the single electric/electronic interface of the hardware type accessible outside the control device 1.

Alternatively, the device 1 could communicate with the loads by means of a wireless signal. In such embodiment, the loads are preferably power-supplied by respective batteries.

Preferably, the control unit 8 is associated with the first 6 and second sensor means 7 to receive said signals representing the measured quantities and to the motor 2, so as to drive it as a function of said signals. Thus, the control unit 8 is configured to drive the motor 2 in a passive, driver or generator mode as a function of the state of the bicycle (i.e. signals from the sensor means).

Thus, the control unit 8 is configured to act in at least one operating mode (or functioning mode) and, preferably, at least one anti-theft mode.

With reference to the control unit 8, in the operating mode it is configured to determine, as a function of said signals received from the first and second sensor means 6, 7, at least one characteristic curve for driving the motor 2 having a pre-set trend and drive the motor 2 in the first or in the second drive mode depending on the trend of such curve.

More precisely, the control unit 8 comprises at least one closed loop controller 9 configured to drive the motor 2 according to at least one feedback loop.

More precisely, the closed loop controller 9 is configured to drive the electric motor 2 as a function of the error signal correlated with the diversion between a reference value (signal) R and a feedback quantity.

Preferably, at least in the operating (functioning) mode of the control unit, the closed loop controller 9 is configured to:
determine a state of the bicycle as a function of said signals generated by the first sensor means 6,
determine, as a function of said state of the bicycle, at least one characteristic curve for driving the motor 2 having a pre-set trend.

As concerns this, the control unit 8 preferably comprises a finite-state machine 10.

Thus in the preferred embodiment, the finite-state machine 10 is configured to detect said "current" state of the bicycle 100 as a function of the signals received from said sensor means 6 (and/or possibly from other similar sensor means) and to determine the characteristic curve for driving the motor correlated with said state.

More precisely, the finite-state machine 10 comprises a nominal module configured to determine (or contain) a plurality of curved (or curve beam) nominal drive characteristics, each referring to a relative state.

Thus, the finite-state machine 10 is configured to select, from among said plurality, the drive characteristic curve (or beam curve) correlated with the state detected as a function of the signals received from the first sensor means 6.

Examples of detectable states of the finite-state machine are one or more of the following:
- Start (or boost): corresponding to the standing start or a sudden acceleration during the motion of the bicycle; such state preferably has a finite duration, which can be established for example as a function of the number of pedal revolutions, or it can last until the bicycle reaches the predefined speed;
- No traction: corresponding to a condition in which, with the bicycle in motion, the speed of the free-wheel mechanism is lower than the speed of the wheel; for example, this condition occurs when the bicycle is travelling downhill without pedalling;
- Traction (or cruising): corresponding to a condition in which the speed of the free-wheel mechanism is equal, minus a tolerance, to the speed of the bicycle wheel; such state for example corresponds to a cruising condition at an approximately constant speed of the bicycle while pedalling;
- Braking: corresponding to a braking condition, with said modes, of the bicycle.

The characteristic curves are preferably conformed so as to return the value of a drive signal of the electric motor 2 (in current) as a function of a current speed of the bicycle 100 and/or a number of pedal revolutions. Each state has its own "nominal" characteristic curve.

However, though varying in values and parameters, the characteristic curves generally have an interlock or minimum recovery section at low speeds and a maximum recovery section at high speeds.

It should be observed that in this document the expression low or high speeds does not refer to absolute values but rather values greater or smaller than a given "inversion" speed, variable as a function of the state and surrounding conditions.

In the present invention, inversion speed corresponds to the advancement speed of the bicycle in which the characteristic curve is expected to move from the first drive manner (actuator) to the second (generator).

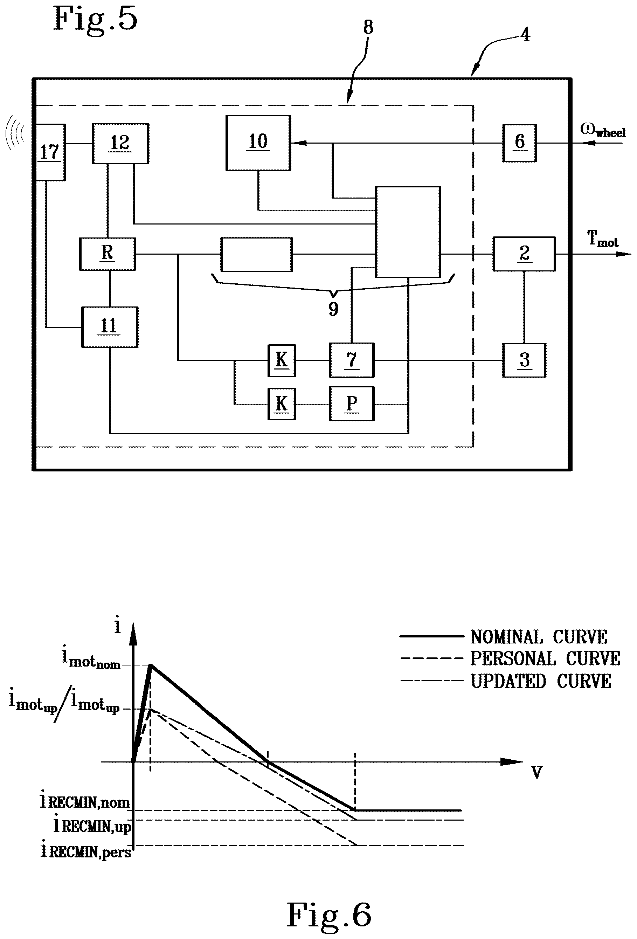

An example of a characteristic traction curve is illustrated in the attached figure 6, wherein the following parameters are identified:
- iₘₒₜ = motor drive current
- Vᵢₙᵥ = inversion speed
- i_{rec, min} = minimum recovery current (i.e. maximum recovery).

Examples of such characteristic curves are for example contained in drawings 4a-4f and from page 11, line 11 to page 18, line 23 of the international patent application No. PCT/IB2018/050202, filed on behalf of the Applicant in Italian language and herein incorporated for reference.

However, the states as well as drive and generation logics of the drive characteristic curves could alternatively be different.

In any case, irrespective of the shape of the characteristic curves, the closed loop controller 9 is configured to drive the electric motor 2 according to a characteristic curve and as a function of said energy consumption of the battery pack "SOC".

More precisely, the closed loop controller 9 is configured to correct the drive signal determined according to the characteristic curve (and thus as a function of the current state of the bicycle) as a function of the current and voltage levels detected by the second sensor means 7.

For example in the first drive mode (when the electric motor 2 is an actuator) the closed loop controller 9 is actually configured to reduce the motor drive signal value determined by the characteristic curve, typically a drive current, as the battery pack state of charge "SOC" decreases, so as to limit the consumption of the battery pack 3 as much as possible. Similarly, in the second drive mode, the closed loop controller 9 is configured to reduce (in the module) the motor drive signal value determined by the characteristic curve, i.e. the current supplied by the electric motor 2 to the battery pack 3, when the battery pack state of charge "SOC" rises above a (further) threshold value, so as to limit the "additional" effort required of the cyclist, which would be unjustified for high charge levels.

Furthermore, the closed loop controller 9 is preferably further configured to modify the parameters of the characteristic curve (at the subsequent step) as a function of the energy consumption of the battery pack "SOC".

As a matter of fact, depending on the adopted control logic the characteristic curves are modified/updated according to the battery state of charge "SOC" and/or the power required for the recharge.

Thus, the characteristic curves are adapted based on the action of the adjustment device considering this input information.

In other words, as the battery pack state of charge "SOC" increases or reduces, the characteristic curves are modified by increasing or reducing the inversion speed or, alternatively or jointly, by modifying the motor drive current level, both in assistance and recovery mode.

An example of such closed loop control is contained from page 18, line 23 to page 20, line 23 and in figures 8a-8c of document PCT/IB2018/050202, filed on behalf of the Applicant in Italian language and incorporated herein for reference.

Thus, the control unit 8 is programmed to drive the electric motor 2 so as to pursue a pre-set reference value R representing a determined energy recovery level of the battery pack 3 (and preferably generated by a special module R, schematically illustrated in figure 5).

Thus, as previously mentioned the control unit 8 is programmed to drive the electric motor 2 proportionally to an error signal calculated between said reference value R and the value of a feedback signal.

In other words, the control unit 8 is programmed to determine a reference energy recovery that is expected to be obtained during the course of the cyclist to recharge the battery pack 3.

Such energy recovery level of the battery pack 3, represented by said reference value R, is thus calculated so as to compensate the energy consumptions of the battery pack 3 to maintain the loads, whether the bicycle is activated or deactivated.

It should be observed that the energy recovery level can be determined in terms of the state of charge of the battery pack 3 during the course and/or in terms of average power recovered during the course.

In bike sharing applications, for example, irrespective of the use of the bicycle, the latter comprises a plurality of sensors/electronic devices that should be power-supplied and that, even before the user communicates the course thereof, have consumed part of the energy contained in the battery pack 3.

In light of the above, the control unit 8 is not only programmed to avoid excessive energy consumption of the battery pack 3 during the course, but also to obtain an energy recovery sufficient to compensate the consumptions to which the battery pack 3 is subjected even when the bicycle 100 is inoperative.

According to a first aspect of the present invention, the control unit 8 comprises a predictive module 11 configured to receive - from a remote device 101 - one or more data relating to an energy profile of a user who is about to use the bicycle 100.

It should be observed that, irrespective of the mode through which the data relating to the energy profile of a user is established/calculated, what is detected is that the parameters used and the data sent to the predictive module 11 represent the ability of the user, based on historical data, to correctly contribute towards energy recovery by the battery pack when using the bicycle 100 (i.e. towards reaching/exceeding the reference value R).

Preferably, in any case, said one or more data relating to the energy profile of the user comprise a historical recharge level, defining an energy contribution historically generated by said user in the battery pack of said bicycle 100 or other bicycles correlated therewith.

In other words, data relating to the energy profile of the user comprise a historical recharge level defining an energy contribution historically generated by said user in the battery pack of the bicycles 100 which are part of the same bike sharing system 1000.

It should be observed that the expression "historically generated energy contribution" is not used to exclusively indicate a positive contribution by the user, but rather a contribution that can be positive (recharge) or negative (consumption) as a function of how virtuous the user is.

It should be observed that the statistical recharge level data can be represented as an average of the recovery values obtained over the various courses carried out over a pre-set period of time or as a discrete score calculated based on such energy parameter.

Preferably, the statistical recharge level data is at least partly defined by a parameter that can be varied between at least one first value, representing high efficiency of the user in terms of energy recovery of the battery pack 3, and at least one second value, representing poor efficiency of the user in terms of energy recovery of the battery pack 3.

Operatively, the predictive module 11 comprises (or is associated with) a data transmission element 17, configured to exchange information with the electronic device 500 of the user, directly through short range transmission means, or through the cloud computing system.

More precisely, the electronic device 500 is configured to send to the predictive module 11, in particular through transmission means, at least one signal having an information content representing said one or more data relating to the energy profile of the user associated with the bicycle 100.

According to an aspect of the invention, the control unit 8 is configured to use the aforementioned one or more data relating to the energy profile of said user to determine the pre-set trend of said characteristic curves. Furthermore, the control unit 8 is preferably programmed to use such data relating to the energy profile of the user to modify at least one of the contributions to the error signal, so as to improve the readiness of the closed loop controller 9.

In other words, the control unit 8 can use such devices related to the energy profile of said user to also modify the pre-set reference value R of the energy recovery level of the battery pack 3 and/or the feedback signal value of the closed loop controller 9, so as to adapt the value of the error signal to the "expected" behaviour of the user.

Advantageously, in this manner the predictive module 11 substantially acts as an open loop, contributing to quickening/optimising the action of the closed loop controller 9 thus providing information useful for a greater knowledge of the "user system".

This mainly turns into an advantage exploited by the device 1 for better calibration of the behaviour of the controller 9 in the initial transient of bicycle use, wherein the data available for feedback is generally insufficient to allow a correct response of the system.

Furthermore, such predictive module allows to limit the interference effect (unusual road profile, thus different consumption for example) that can affect the feedback loop during the entire operation.

In other words, the predictive module 11 is configured to preliminarily adapt the "nominal" parameters that the closed loop controller 9 would tend to use as a function of statistical data knowledge of the user, thus making the control system readier.

This is advantageously important in a bike sharing system 1000, wherein the device 1 (and thus the closed loop controller 9) is associated with a single bicycle 100 used for short courses by a plurality of different users.

Advantageously, due to the action of the predictive module 11, the control device 1 adapts its action to the behaviour, expected based on historical data, of the user who is associated/coupled (through the electronic device 500 thereof) to the bicycle 100.

As a matter of fact, due to the information received from the electronic device 500 (directly or through the cloud computing system), the predictive module 11 allows the control device 1 to learn information relating to the riding style of the user and it allows the control unit 8 to consequently adapt the control parameters (reference value R and pre-set trend of the characteristic curves).

For example, should said data relating to the energy profile of the user represent a "poorly-virtuous" user, i.e. with a poor ability to supply the required recovery to the battery pack, the predictive module 11 may supply such information to the closed loop controller 9, modifying the characteristic curves so as to reduce assistance or increase energy recovery.

Furthermore, the control unit 8 preferably will also modify at least one of the parameters defining said error signal.

For example, the control unit 8 could modify the required recovery level (by increasing it) or by setting, at least in the initial transient of the course, a recovered power value based on said data related to the energy profile of the user (i.e. "negative" energy consumption of the battery pack 3).

In other words, the information relating to the statistical behaviour of the user can be used to vary the reference to be pursued by the closed loop controller 9.

The latter aspect allows to move the required recovery level to a higher level considering the fact that the user, based on the available statistical data, will not be able to achieve the objective, at least allowing to reach the "nominal" recovery level.

On the contrary, should said data relating to the energy profile of the user represent a "very virtuous" user, or with capacity to supply to the battery pack a recovery level even higher than the one required, the predictive module 11 may supply such information to the closed loop controller 9, modifying the characteristic curves so as to increase interlock or reduce energy recovery and, simultaneously, reducing the required recovery level. Alternatively, or jointly with the modification of the reference value R, the data relating to the energy profile of the user coming from the predictive module 11 could be used by the control unit 8 to modify the feedback signal.

For example, in a preferred embodiment the control unit 8 could modify the weight "k" of the feedback loop of the closed loop controller 9, at least at an initial stage of the course (in terms of kilometres or time). More precisely, in such embodiment, two contributions are preferably identified on the feedback loop of the closed loop controller 9, a first contribution comprising data relating to the second sensor means 7 and relating to the current state of the system (actual feedback) and a second contribution "P" associated with said data relating to the energy profile of the user, and the control unit 8 is configured to confer greater weight "k" to the second contribution, with respect to the first, in an initial transient of the course.

It should be observed that, in a preferred embodiment, data relating to the energy profile of the user also comprise at least one piece of information representing the routes usually travelled by the user with said bicycles 100 of the system.

Advantageously, in this manner the predictive module 11 may additionally improve the adaptation of the control device 1 to the user.

For example, such data may comprise one or more of the following parameters:
- (average) incidence of the uphill sections during the course;
- (average) slope of the uphill sections;
- power (averagely) required of the battery pack 3 in the uphill sections;
- (average) incidence of the downhill sections during the course;
- (average) slope of the downhill sections;
- power (averagely) recovered by the battery pack 3 in the downhill sections;
- power (averagely) recovered by the battery pack 3 while braking;
- power averagely required at start or during accelerations / change of pace.

As concerns this, but not exclusively referring to this aspect, the control device is preferably provided with a geolocation element 18 integrated in the containment body 4.

Furthermore, the predictive module 11 is preferably associated with a data update module (not illustrated), configured to monitor the one or more data relating to the energy profile of the user of the single course in progress (i.e. the current course) and to send said data to the cloud computing system 1001 at the end of the course, preferably through said data transmission element 17.

According to a further aspect of the present invention, alternative or complementary to what has been described up to now, the control unit 8 comprises a preliminary setting module 12 (preferably associated with the closed loop controller 9) configured to receive - from the user - a piece of information representing a drive configuration of the electric motor 2 and to set the pre-set trend of said at least one curve based on the selected configuration.

Preferably, such preliminary setting module 12 is configured to receive - from the user - a piece of information representing a drive configuration of the motor 2 that can be selected from among at least one interlocked configuration and one recharge configuration.

In the interlocked configuration, the motor 2 is mainly driven in said first manner and the assistance level thereof is maximised for a pre-set time interval or a predetermined covered distance (where the expression "predetermined covered distance" is used to define reaching a lower charge limit of the battery pack).

In the recharge configuration instead, the assistance level of the motor 2 is substantially null and the motor 2 is driven in said second manner. However, in the preferred embodiment the drive configurations that can be selected by the user are at least three.

As concerns this, the preliminary setting module 12 is preferably configured to receive - from the user - a piece of information representing at least one first, one second or one third operating configuration, wherein: The first configuration corresponds to the operating mode described up to now, i.e. a hybrid mode in which the electric motor 2 is alternatingly driven in the first or in the second drive manner as a function of the state of the bicycle 100.

The second and the third configuration instead correspond to the interlock and recharge configurations mentioned above.

Preferably, in the second configuration the control device 1 is programmed to drive the electric motor 2, minimising or nullifying the energy recovery section required of the user in the motor drive characteristic curves. Operatively, once the user selects the second configuration, the control device 1, in particular the control unit 8, is configured to drive the electric motor 2 according to one or more drive characteristic curves that are special and conformed so as to maximise the contribution supplied by the user over a predetermined time interval, compatible with the battery pack state of charge "SOC".

Contrary to the second, the third configuration instead provides that the interlock level of the electric motor 2 be substantially null.

More precisely, once the user selects the third configuration, the control device 1, in particular the control unit 8, is configured to drive the electric motor 2 mainly or entirely in the second manner (generator).

More precisely, in said third configuration, the control unit 8 is configured to drive the electric motor 2 in the second manner over the entire course, varying the recovery level (in terms of current intensity generated by the motor) as a function of the state of the bicycle 100.

For example, if in the first configuration the identification of a climbing state would have entailed the maximisation of interlock by the electric motor, upon selecting the third configuration such state only entails the elimination of recovery, i.e. the zeroing of the current generated by the rotor during the rotation (which leads to, though without interlock, facilitating the user).

Thus, once the user selects the configuration, the control unit 8 is configured to set the pre-set trend of the characteristic curve (or characteristic curves) based on said configuration.

Thus, the first, second and third configuration preferably differ from each other in terms of shape and balancing between the interlock sections and the recovery sections of the motor drive characteristic curves.

It should be observed that the second configuration can preferably be set only as concerns battery pack state of charge "SOC" exceeding a predetermined threshold value.

In other words, the control unit 8 is configured to send - to the electronic device 500 (directly or through the cloud computing system) - a signal having an information content representing said battery pack state of charge "SOC".

More precisely, the control unit 8 (and/or the preliminary setting module 12) is associated with the second sensor means 7 to receive the signal representing the battery pack state of charge "SOC" and comprises a communication module configured to transmit at least one signal representing a first piece of information correlated with the battery pack state of charge "SOC" and to receive a signal representing a second piece of information correlated with the operating configuration selected by the user. Preferably, the communication module corresponds to the data transmission element 17.

Preferably, the device 500 comprises a display module 501 in which the three configurations can be displayed and selected by means of a special interface element (keypad or touch screen).

The electronic device 500 is in turn programmed to make only the configurations compatible with said battery pack state of charge "SOC" available (i.e. selectable) to the user.

In detail, the display module 501 is configured to display to the user the operating configurations compatible with the battery pack state of charge "SOC" and to allow the user to select one of said configurations.

Thus, the display module 501 is configured to display to the user the available configurations as a function of said first piece of information. Furthermore, the device 500 is configured to transmit (through a transmission module) said second piece of information to the control device 1 (i.e. the data communication element 17).

Thus, as concerns battery pack state of charge "SOC" lower than said predetermined threshold value, the electronic device 500 makes only the first and third configuration available (i.e. selectable) to the user.

On the contrary, as concerns battery pack state of charge "SOC" exceeding said predetermined threshold value, the electronic device 500 additionally makes the second configuration available (i.e. selectable). Furthermore, the electronic device 500 is preferably configured to display to the user (by means of the display module 501) the available operating configurations, besides as a function of the battery pack state of charge (SOC), even based on said one or more data relating to an energy profile of the user.

More precisely, the electronic device 500 is configured to make the second configuration available only for users associated to whom is a historical recharge level close to said first value, representing a high efficiency of the user as concerns the energy recovery of the battery pack 3.

As regards this, it should be observed that the electronic device 500 preferably also comprises a processing module 502 configured to:
- provide user identification information;
- associate said user to the control device 1 of the bicycle;
- transmit a piece of information representing said association;
- receive a signal representing the operating configurations of the control device 1 compatible with the battery pack state of charge SOC and/or with the data regarding the energy profile of the user;
- generate a signal representing said second piece of information.

Thus, the electronic device 500 is preferably programmed to:
- display to the user through the display module 501 said first and third operating configuration so that they are selectable, alternatingly, by said user;
- compare the battery pack state of charge "SOC" of the bicycle 100 with said predetermined threshold value;
- compare said historical recharge level of the user with a pre-set limit value;
- display to the user through the display module 501 said second operating configuration, additionally to the first and the third, only if said comparisons reveal a positive outcome (i.e. the battery pack state of charge "SOC" is higher than said predetermined threshold value and the historical recharge level of the user is higher than said limit value).

A further aspect of the present invention, alternative or complementary to those described up to now, is correlated with the aforementioned anti-theft mode.

According to such aspect of the present invention, in the anti-theft mode the control unit 8 is configured to control the electric motor 2 so as to impart a torque contrary to a direction of rotation of the wheel 102 detected by the (first) sensor means 6.

In other words, in the anti-theft mode the control unit 8 drives the electric motor 2 at least partly as an active brake which opposes the rotation of the of the wheel 102 only in response to the detection of a rotation thereof.

In the anti-theft mode, the control unit 8 is configured to drive the motor 2 both in a passive configuration and in an active configuration. In said passive configuration, the motor 2 does not demand energy from the battery pack 3 and it determines a resistance to advancement at least partly proportional to the speed of the wheel.

On the contrary, in the active configuration the motor 2 is driven so as to impart the aforementioned torque opposite to the direction of rotation of the wheel, demanding power/energy from the battery pack 3.

Thus, in detail the electric motor 2 can be driven, besides in the first and in the second manner illustrated above, also in a third and in a fourth manner.

In the third manner, the electric motor 2 is substantially short-circuited, so as to supply to the wheel a resistant torque proportional to the speed of rotation thereof (due to the induced currents).

In the fourth manner, the electric motor 2 is driven as an active brake, i.e. imparting the torque opposite to the direction of rotation of the wheel (due to the current which, drawn from the battery, flows in the motor).

Thus, in the passive configuration of the anti-theft mode, the control unit 8 is configured to drive the motor 2 in the second or in the third manner, preferably mainly with the third manner.

In the active configuration of the anti-theft mode instead, the control unit 8 is configured to drive the motor 2 in the fourth manner.

It should be observed that in the anti-theft mode, the control unit 8 is configured to drive the motor in the passive configuration below a pre-set speed limit, moving on to the active configuration above said limit value. More precisely, the control unit 8 is designed to receive from the first sensor means 6 a signal representing the advancement speed of the bicycle 100 (or rotation speed of the wheel 102) and configured to: compare the value of said signal with a limit value;
set the passive configuration of the anti-theft mode if said value is below the limit value;
set the active configuration of the anti-theft mode if said value is above the limit value;

Thus, in the anti-theft mode the electric motor is preferably driven as a passive brake at low speeds and as an active brake only when the advancement speed (or the wheel speed) of the bicycle increases. Advantageously, this allows reducing the energy consumption of the battery pack and the manual movement/displacement of the bicycle for short distances is allowed.

As regards this, it should be observed that the control unit 8 is preferably configured to activate the anti-theft mode independently when the bicycle 100 is inoperative.

More precisely, with reference to the bike sharing system 1000 which the bicycle 100 is part of, the control unit 8 is configured to activate the anti-theft mode when the control device 1 of the bicycle 100 is de-coupled from any electronic device 500 (i.e. from any user profile).

In other words, the control unit 8 is configured to remain "active" in the anti-theft mode in the time interval that elapses between the end of a course by a user, with ensuing disconnection of the relative electronic device 500 from the control device 1 of the bicycle, and the start of a subsequent course by a further (or the same) user, identified by the association between a further (or the same) electronic device 500 and control device 1.

It should be observed that the control unit 8 is preferably configured to determine said reference value R representing the desired energy recovery level of the battery pack 3 even as a function of the time interval that elapses between two subsequent uses of the bicycle 100, in that the presence of an active brake affects the charge of the battery pack 3. According to a further aspect of the invention, complementary or alternative to those described up to now, the control device 1 comprises an inertial measurement unit 13 suitable for measuring one or more accelerations and one or more angular velocities of the containment body 4 (or of the bicycle 100).

The inertial measurement unit 13 is preferably configured to measure one or more from among the longitudinal Ax, lateral Ay and vertical Az accelerations and/or one or more from among roll ωx, pitch ωy and yaw ωz angular velocities of the containment body 4 (or of the bicycle 100) and to generate signals representing the same.

As a matter of fact, it should be observed that the inertial measurement unit 13 is arranged inside the containment body 4, for example constrained to the printed circuit board 8a.

However, in the preferred embodiment said inertial measurement unit 13 is arranged in the battery pack 3.

With reference to the anti-theft mode described above, the control unit 8 is also configured to detect a hazard condition when the signal representing the lateral Ay and/or vertical Az acceleration exceeds a determined limit value and to send - to sound and/or visual emission means - an alarm signal upon detecting said hazard condition.

Advantageously, in this manner the anti-theft mode allows to identify both a theft attempt "while riding" as well as more conventional theft attempts by lifting or acts of vandalism.

Furthermore, the control unit 8 of the device 1 is preferably configured to receive - from the first sensor means 6 and from said inertial measurement unit 13 - the respective signals and to process them so as to obtain at least one piece of information regarding an action of braking or turning the bicycle 100 that occurred during the longitudinal movement of the bicycle 100.

More precisely, the control unit 8 is configured to identify the turning of the bicycle when the signal representing the lateral acceleration Ay and/or the yaw angular velocity ωz exceeds a determined limit value.

Similarly, the control unit 8 is configured to identify a bicycle braking action when the signal representing the longitudinal acceleration Ax (and possibly the pitch angular velocity ωy) exceeds a determined limit value. As regards this, it should be observed that the control unit 8 preferably comprises a riding interpretation module configured to receive the signals from the inertial measurement unit 13 and process them as described above.

It should be observed that given that the inertial measurement unit 13 is preferably arranged in the containment body 4, and thus basically in the wheel hub 102, the control unit 8 (and the riding interpretation module) comprises at least one extended Kalman filter, configured to recursively calculate a Kalman filter gain based on said signals representing the longitudinal speed (and possibly the pitch angular velocity) and/or the transverse speed (and possibly the yaw angular velocity) of the bicycle 100 and to estimate the occurrence of a turning and/or braking based on said Kalman filter gain.

Furthermore, a module for determining correction parameters such to modify said Kalman filter gain based on one or more signals representing quantities of the bicycle such to affect said slope estimate by the extended Kalman filter is preferably provided.

An example of use/correction of an extended Kalman filter like the one described above is contained from page 8, line 15 to page 17, line 20 of the Italian patent application No. 102017000017602, filed on behalf of the Applicant and herein incorporated for reference with the aim of providing further details.

Advantageously, the possibility of adapting the filter gain as a function of the current parameters of the bicycle 100 allows greater accuracy in the identification of the event subject of estimate (turning or braking). According to such aspect of the invention, alternative or complementary to what has been described up to now, at least one from among a cyclist turning indicator device 107 and/or braking signalling device 108 is associated to the bicycle 100.

More precisely, such turning indicator device 107 and/or braking signalling device 108 are constrained to the frame 101 of the bicycle 100. In the preferred embodiment, both the turning indicator device 107 and braking signalling device 108 are constrained to the bicycle.

Thus, the control unit 8 is configured to send to the indicator device 107 or to the signalling device 108 a first signal representing said turning information or a third signal representing said braking information.

The indicator device 107 and said signalling device 108 are configured to emit a light radiation as a response to the receipt of the respective signal. In the preferred embodiment, the turning indicator device 107 and the braking signalling device 108 are configured to emit a light radiation, preferably blinking at least as concerns the turning indicator 107. Structurally, such devices 107, 108 are preferably LED emitters. Preferably, such devices are connected to the control device 1 by means of said power interface 14 and/or said data transmission cable 15. However, the turning indicator device 107 and the braking signalling device 108 could alternatively be of the stand-alone type i.e. powered by special batteries.

In such embodiment, such devices 107, 108 are driven by means of a wireless communication system. Thus, in such embodiment, the device 1 is provided with a transmission module suitable to communicate with a respective data reception module associated with the devices 107, 108.

It should be observed that, with reference to such aspect of the invention (i.e. transmission of turning/braking signals), providing any electric machine, even a dynamo, could be sufficient and thus without requiring an electric motor capable of supplying torque to the wheel.

Thanks to the structure of the control device 1 described up to now, at least one method for controlling a pedal-assisted bicycle in a bike sharing system can be actuated exclusively in some or all parts thereof. This is another object of the present invention and described in the following.

It should be observed that, as regards all method steps indicated below, where the outlined characteristics refer to structural characteristics of the bicycle or of the control device mentioned above, all that has been described above shall be deemed applicable mutatis mutandis.

Thus, the method provides for determining at least one nominal characteristic curve for driving the motor.

Preferably, a plurality of nominal characteristic curves, each correlated to or referring to a respective state and/or configuration of the bicycle is determined.

It should be observed that the nominal characteristic curve for driving the motor is determined (or the nominal characteristic curves are determined) as a function of a nominal reference value correlated with a determined energy recovery level of the battery intended to be obtained at the end of the course of said user.

A user who is about to use the bicycle 100 is identified and one or more data correlated with an energy profile of said user are determined subsequently or simultaneously.

Though the nature of such data has been extensively addressed above, it is still worth pointing out that they comprise a historical recharge level defining an energy contribution historically generated by said user in the battery pack of the bicycles 100 part of the same bike sharing system 1000.

It is emphasised that the expression "historically generated energy contribution" is not used to exclusively indicate a positive contribution by the user, but rather a contribution that can be positive (recharge) or negative (consumption) as a function of how virtuous the user is. Furthermore, the current and voltage level of the battery pack 3 is detected preferably by means of the second sensor means 7 (step d). In particular, an energy consumption of the battery pack is detected based on such signals; the energy consumption can be obtained as the power recovered (or consumed) by the battery pack or as the state of charge (instantaneous or average) thereof.

At least one updated characteristic curve for driving the motor (step e) is determined as a function of the data correlated with the energy profile of said user (e.g. historical recharge level). In particular, the nominal characteristic curve is updated (i.e. it becomes the "updated characteristic curve") by varying said nominal characteristic curve as a function of said one or more data correlated with an energy profile of said user and said energy consumption of the battery pack 3.

For example, the nominal characteristic curve can be "updated" by modifying the inversion speed, reducing it for low battery pack state of charge "SOC" or historical recharge level or increasing it for high battery pack state of charge "SOC" or historical recharge level.

Alternatively, the current intensity levels, both in interlock and recovery mode, could be modified in light of said historical recharge level and/or the battery pack state of charge "SOC", as a function of the control strategy applied, for example by increasing the motor drive current in interlock battery mode (i.e. higher contribution) and/or reducing (in the module) the recovery current level for high historical recharge levels (virtuous user, ed.) or, vice versa, by reducing the motor drive current in interlock mode (i.e. lower contribution) and/or increasing (in the module) the recovery current level for a low historical recharge level (non-virtuous user, ed.).

It should be observed that, in the preferred embodiment, the updated characteristic curve is determined in subsequent logic steps, i.e. "customising"- in a first step - the nominal characteristic curve (or nominal characteristic curves) as a function of the data correlated with an energy profile of the user and then recursively "updating it" - in a second step - as a function of the energy consumption of the battery pack 3.

Thus, more precisely, at least one customised characteristic curve for the drive of the motor is determined by varying (one or more parameters of) said nominal characteristic curve as a function of the one or more data correlated with the energy profile of the user (sub-step e1).

Preferably, at least one further parameter selected from among the nominal reference value and the feedback quantity value (control variable) is also updated as a function of said one or more data correlated with the energy profile of the user, so as to adapt/customise the error signal value (i.e. the diversion between the reference and the feedback quantity) calculated between the reference value and the feedback value of the control variable as a function of the behaviour expected of the user.

In a first embodiment, for example, the nominal energy consumption reference value is updated with the aim of obtaining a customised reference value of energy recovery of the battery pack.

A feedback quantity value which, for at least one first transient (time or kilometric), is mainly a function of data correlated with the energy profile of the user.

A current motor drive value as a function of at least an advancement speed and/or acceleration of the bicycle (sub-step e2) is then identified on said customised characteristic curve.

The electric motor 2 is driven according to a signal having said present value, preferably current value (sub-step e3).

The updated characteristic curve is then determined "by updating" the customised characteristic curve as a function of the energy consumption of the battery pack 3, preferably the battery pack state of charge "SOC" (sub-step e4).

A current motor drive value, as a function of at least an advancement speed and/or acceleration of the bicycle (step f) is then identified on the updated characteristic curve.

In other words, the present value (current value) for driving the motor is established on the updated characteristic curve as a function of the speed or acceleration of the bicycle 100 (measured using the first sensor means 6 or inertial measurement unit 13).

The electric motor 2 is then driven according to a signal having said drive current value (step g).

The method then provides for recursively repeating the detection, determination, identification and drive steps (steps d, e, f, g) with the aim of controlling the electric motor 2 according to a closed loop logic.

It should be observed that, between sub-steps e1-e4 of the determination step of the updated characteristic curve, preferably only sub-step e4) is repeated recursively with steps d), f), g).

Advantageously, in this manner the predictive step related to the historical recharge level of the user is exploited in the start stage only, i.e. characteristic curves customisation.

The logic for the "update" of the characteristic curves as a function of the data correlated with the energy profile of the user and the level of charge of the batteries is schematically illustrated in figure 6, which shows the variation of the main parameters of the curve (iₘₒₜ, Vᵢₙᵥ and i_{rec, min}) both in light of "customisation" and subsequent "update". In particular, the figure shows how the characteristic curve is customised by reducing the contribution in interlock mode, by reducing the inversion speed and increasing the recovery current, an event representing the identification of a non-virtuous user.

Similarly, it shows how - in update - the curve is progressively made more "awarding", an event representing a use better than expected of the user. Clearly, such representation purely schematically illustrates a possible embodiment of the method described up to now, but it shall not be deemed to limit or represent only one possibility of exploiting the knowledge of the historical data of the user.

The invention achieves the pre-set objects and attains significant advantages.

As a matter of fact, providing a control system provided with a predictive module allows to increase the readiness of the control, allowing to near the current level of the recovery level to the reference value in a short time while maintaining the course of the cyclist comfortable in any case.

Such aspect clearly gains considerable importance in a bike sharing system, where the cyclist is occasional and the duration of the course is short.

Furthermore, the possibility for the user to select from among several operating configurations makes the bicycle particularly pleasant to use, given the possibility to adapt to the needs of the user. Furthermore, the possibility to enable or disable the most awarding configuration only for users with "virtuous" profiles, is a strong incentive for a correct use of the means, thus entailing a considerable technical advantage in terms of maintenance of the bicycles and maintaining the state of charge.

From a structural point of view, the presence of an extremely compact control device, entirely contained in the wheel hub, possibly without a loads power supply cable, makes the bicycle very simple and linear, thus reducing its production cost (a conventional frame is enough).

The invention also significantly boosts the safety of the cyclist due to the presence of automatic/independent indicators, directly controlled by the control unit of the control device due to the presence of special sensors integrated in the hub.

On the other hand, as concerns the safety of the means, providing an active brake, preferably redundant with respect to a more conventional padlock brake, is quite advantageous especially in bike sharing applications used in pedal-assisted bicycles.

## Claims

1. A control device for controlling a pedal-assisted bicycle (100) comprising a pedal-thrust group (103), a transmission (104) operatively interposed between said pedal-thrust group (103) and at least one wheel (102) and a free-wheel mechanism (105) associated with said at least one wheel (102), said control device comprising:
- an electric motor (2) associated with a wheel (2) of the bicycle (100);
- at least one battery pack (3) associated with said motor (2) so as to bidirectionally exchange energy with it;
- first sensor means (6) configured to detect at least one quantity correlated with the speed of one wheel (102) of the bicycle and to generate one or more signals representing this at least one quantity;
- at least one control unit (8) associated with said first sensor means (6) and with said motor (2) and configured to drive the electric motor (2) at least according to one operating modality, wherein it acts as an actuator or generator as a function of the angular velocity of the wheel (102);
wherein said control unit (8) is further configured to drive the electric motor (2) according to an anti-theft modality, wherein said motor (2) imparts a torque opposite to a direction of rotation of the wheel (102) as detected by the first sensor means (6),
and wherein, in the anti-theft modality, the control unit (8) is configured to drive the motor (2) alternatively in a passive configuration, wherein the motor (2) does not require energy from the battery pack (3), or in an active configuration, wherein it imparts said torque opposite to a direction of rotation of the wheel (102) and requires energy from the battery pack (3), **characterised in that** in the anti-theft modality, the control unit (8) is configured to drive the motor (2) in the passive configuration under a preestablished speed limit for the bicycle (100) and to drive the motor (2) in the active configuration over said speed limit.

2. The control device according to claim 1, **characterised in that** said electric motor can be driven in:
a first manner, wherein the motor (2) supplies a torque consistent with a direction of rotation of the wheel (102),
a second manner, wherein the rotation of the wheel (102) determines a transfer of current from the motor (2) towards the battery pack (3),
a third manner, wherein the motor (2) is substantially short-circuited so as to supply a resisting torque to the wheel which is proportional to the rotational speed of the wheel,
a fourth manner, wherein the motor (2) imparts said torque opposite the direction of rotation of the wheel (102).

3. The device according to claim 2, **characterised in that** in the active configuration of the anti-theft modality, the control unit (8) drives the electric motor (2) in the fourth manner.

4. The device according to claim 2 or 3, **characterised in that** in the passive configuration of the anti-theft modality, the control unit (8) drives the electric motor (2) in the second and the third manner, with a prevalence of said third manner.

5. The control device according to any one of the preceding claims, **characterised in that** said first sensor means (6) further comprises an inertial measurement unit that is suitable for measuring at least one acceleration of the bicycle and for generating signals representing this acceleration; in the anti-theft modality, said control unit (8) being configured to:
detect a dangerous condition when said signal representing said at least one acceleration exceeds a given threshold value;
send an alarm signal to means for generating sounds and/or visual elements upon detection of said dangerous condition.

6. The control device according to any one of the preceding claims, wherein the control unit (8) is configured to activate the anti-theft modality independently, in response to a signal representing a state in which the bicycle is parked.

7. A pedal-assisted bicycle comprising:
- a frame (101);
- at least one wheel (102);
- a control device (1) according to any one of the preceding claims, comprising a containment body (4) connected to at least one wheel (102) of the bicycle so that a central axis (A) of the containment body (4) corresponds to an axis of rotation of the wheel (102);
- an electric machine or motor (2) housed in said containment body (4);
- a battery pack (3) housed in said containment body (4) and associated with said electric machine (2) so as to exchange energy with it.

8. The bicycle according to claim 7, **characterised in that** said control device (1) comprises:
- an inertial measurement unit (13) housed in said containment body (4) and configured to measure one or more accelerations and one or more angular velocities of the bicycle and to generate signals representing the same; said control unit (8) being housed in said containment body (4) and associated with said inertial measurement unit (13);
- at least one indicator device (107) for indicating a turn and/or a brake signal device (108) for signalling braking by the cyclist, both constrained to said frame (101);
wherein said control unit (8) is configured to
receive the respective signals from said first sensor means (6) and from said inertial measurement unit (13);
process said signals for the purpose of obtaining at least one piece of information relating to a braking action or turning of the bicycle (100) that has taken place during longitudinal movement of the bicycle (100);
send to said indicator device (107) or to said signal device (108) a first signal representing said information concerning a turn or a second signal represent said information concerning a braking action,
and wherein said indicator device (107) and said signal device (108) are configured to emit light radiation in response to having received said first and said second signal, respectively.

9. The bicycle according to claim 8, wherein the control unit (8) comprises a module for interpreting bicycle manoeuvring which is configured to receive signals from the first sensor means (6) and from the inertial measurement unit (13) and to process them for the purpose of obtaining said information relating to a braking action or turning of the bicycle (100) which have taken place during longitudinal movement of the bicycle (100).

10. The bicycle according to claim 8 or 9, wherein the containment body (4) comprises a sole power interface (14) adapted to provide for powering the external loads connected thereto.

11. The bicycle according to any one of claims 8 to 10, wherein the control device (1) comprises a data communication channel (15) associated with said control unit (8) and arranged so as to send the respective first or second signal to said indicator device (107) and to said signal device (108).

12. The bicycle according to claims 10 and 11, wherein the power interface (14) and the communication channel (15) are housed in a sole sheathed cable (16) which departs from said central axis (A) of the containment body (4).

13. The bicycle according to claim 12, wherein said sheathed cable (16) is the sole electrical and/or electronic interface that is accessible outside of the containment body (4) of the control device (1).

14. A bike sharing system, comprising:
- at least one electronic device (500) that can be associated with a user;
- a plurality of pedal-assisted bicycles equipped with an electric motor (2) associated with a wheel (102), at least one battery pack (3) associated with said motor (2) so as to bidirectionally exchange energy with the motor, a pedal-thrust group (103), a transmission (104) that is operatively interposed between said pedal-thrust group (103) and at least one wheel (102), and a free-wheel mechanism (105) that is associated with said at least one wheel (102),
wherein said electronic device (500) and said bicycles (100) are interconnected to each other by means of a cloud computing system (1001); **characterised in that** each bicycle (100) is equipped with a control device (1) according to any one of the preceding claims and that can be associated with a user through said electronic device (500).

15. The bike-sharing system according to claim 14, wherein the control unit (8) of each control device (1) is configured to activate the anti-theft mode when the control device (1) is disconnected from all electronic devices (500).

## Patentansprüche

1. Vorrichtung zur Steuerung eines pedalgestützten Fahrrades (100), umfassend eine Pedal-Schubgruppe (103), eine operativ zwischen der genannten Pedal-Schubgruppe (103) und mindestens einem Rad (102) eingefügte Übersetzung (104) und mindestens einen mit dem genannten ein Rad (102) verbundenen Freilaufmechanismus (105), wobei die genannte Steuervorrichtung Folgendes umfasst:
- einen Elektromotor (2), der mit einem Rad (2) des Fahrrads (100) verbunden ist;
- mindestens ein Akkupaket (3), das mit dem genannten Motor (2) verbunden ist, um mit dieser bidirektionalen Energie auszutauschen;
- ein erstes Sensorelement (6), das darauf ausgelegt ist, mindestens eine mit der Geschwindigkeit eines Rades (102) des Fahrrads korrelierte Menge zu erfassen und ein oder mehrere Signale zu generieren, die diese mindestens eine Menge darstellen;
- mindestens ein Steuergerät (8), das mit dem genannten ersten Sensorelement (6) und mit dem genannten Motor (2) verbunden und darauf ausgelegt ist, den Elektromotor (2) mindestens gemäß einer Betriebsart anzutreiben, in der er als Antrieb oder Generator abhängig von der Winkelgeschwindigkeit des Rades (102) wirkt;
wobei das genannte Steuergerät (8) außerdem darauf ausgelegt ist, den Elektromotor (2) gemäß eines Diebstahlsicherungsmodus anzutreiben, in dem der genannte Motor (2) ein zu einer Drehrichtung des Rades (102) entgegengesetztes Drehmoment überträgt, das von dem ersten Sensorelement (6) gemessen wird,
und wobei das Steuergerät (8) im Diebstahlsicherungsmodus darauf ausgelegt ist, den Motor (2) alternativ in einer passiven Konfiguration anzutreiben, in der der Motor (2) keine Energie von dem Akkupaket (3) benötigt, oder in einer aktiven Konfiguration, in der er das genannte Drehmoment in einer entgegengesetzten Drehrichtung des Rades (102) überträgt und Energie von dem Akkupaket (3) benötigt,
**dadurch gekennzeichnet, dass** das Steuergerät (8) im Diebstahlsicherungsmodus darauf ausgelegt ist, den Motor (2) in der passiven Konfiguration unter einer zuvor für das Fahrrad (100) festgelegten Drehzahlgrenze anzutreiben und den Motor (2) in der aktiven Konfiguration über der genannten Drehzahlgrenze anzutreiben.

2. Steuervorrichtung nach Anspruch 1, **dadurch gekennzeichnet, dass** der genannte Elektromotor wie folgt angetrieben werden kann:
auf eine erste Weise, bei der der Motor (2) ein mit der Drehrichtung des Rades (102) übereinstimmendes Drehmoment bereitstellt,
auf eine zweite Weise, bei der die Drehung des Rades (102) eine Stromübertragung vom Motor (2) zum Akkupaket (3) bedingt,
auf eine dritte Weise, bei der der Motor (2) im Wesentlichen kurzgeschlossen wird, so dass er ein Widerstandsmoment an das Rad überträgt, das proportional zur Drehgeschwindigkeit des Rades ist,
auf eine vierte Weise, bei der der Motor (2) das genannte Drehmoment entgegengesetzt zur Drehrichtung des Rades (102) bereitstellt,

3. Vorrichtung nach Anspruch 2, **dadurch gekennzeichnet, dass** in der aktiven Konfiguration des Diebstahlsicherungsmodus das Steuergerät (8) den Elektromotor (2) auf die vierte Weise antreibt.

4. Vorrichtung nach Anspruch 2 oder 3, **dadurch gekennzeichnet, dass** in der passiven Konfiguration des Diebstahlsicherungsmodus das Steuergerät (8) den Elektromotor (2) auf die zweite und dritte Weise antreibt, wobei die dritte Weise Vorrang hat.

5. Steuervorrichtung nach einem beliebigen der vorangegangenen Ansprüche, **dadurch gekennzeichnet, dass** das genannte erste Sensorelement (6) außerdem eine inertiale Messeinheit umfasst, um mindestens eine Beschleunigung des Fahrrads zu messen und um diese Beschleunigung darstellende Signale zu generieren; wobei das genannte Steuergerät (8) im Diebstahlsicherungsmodus darauf ausgelegt ist:
eine Gefahrensituation festzustellen, wenn das genannte die mindestens eine Beschleunigung darstellende Signal einen vorgegebenen Schwellenwert überschreitet;
beim Erfassen der genannten Gefahrensituation ein Alarmsignal an Vorrichtungen zur Erzeugung von Tönen und/oder visuellen Elementen auszusenden.

6. Steuervorrichtung nach einem beliebigen der vorangegangenen Ansprüche, bei der das Steuergerät (8) darauf ausgelegt ist, den Diebstahlsicherungsmodus unabhängig als Reaktion auf ein Signal zu aktivieren, das einen Status darstellt, in dem das Fahrrad geparkt ist.

7. Ein pedalgestütztes Fahrrad, umfassend:
- einen Rahmen (101);
- mindestens ein Rad (102);
- eine Steuervorrichtung (1) nach einem beliebigen der vorangegangenen Ansprüche, umfassend einen mit mindestens einem Rad (102) des Fahrrades so verbundenen Gehäusekörper (4), dass eine Mittelachse (A) des Gehäusekörpers (4) einer Drehachse des Rades (102) entspricht;
- eine Elektromaschine oder einen Elektromotor (2), die/der in dem genannten Gehäusekörper (4) untergebracht ist;
- ein Akkupaket (3), das in dem genannten Gehäusekörper (4) untergebracht und mit der Elektromaschine (2) verbunden ist, um damit Energie auszutauschen.

8. Fahrrad nach Anspruch 7, **dadurch gekennzeichnet, dass** die genannte Steuervorrichtung (1) Folgendes umfasst:
- eine inertiale Messeinheit (13), die in dem genannten Gehäusekörper (4) untergebracht und darauf ausgelegt ist, eine oder mehrere Beschleunigungen und eine oder mehrere Winkelgeschwindigkeiten des Fahrrades zu messen und Signale zu generieren, die diese darstellen; wobei das genannte Steuergerät (8) in dem genannten Gehäusekörper (4) untergebracht und mit der genannten inertialen Messeinheit (13) verbunden ist;
- mindestens eine Anzeigevorrichtung (107) zum Anzeigen einer Abbiege- und/oder Bremssignalvorrichtung (108) zum Signalisieren des Bremens des Radfahrers, die beide an dem genannten Rahmen (101) befestigt sind;
wobei das genannte Steuergerät (8) darauf ausgelegt ist,
die entsprechenden Signale von dem genannten ersten Sensorelement (6) und von der genannten inertialen Messeinheit (13) zu empfangen;
die genannten Signale zum Zweck des Erhalts mindestens einer Information bezüglich der Bremswirkung oder des Abbiegens des Fahrrades (100), die während der longitudinalen Bewegung des Fahrrads (100) stattgefunden haben, zu verarbeiten;
an die genannte Anzeigevorrichtung (107) oder die genannte Signalvorrichtung (108) ein erstes Signal zu senden, das die genannte Information bezüglich eines Abbiegens darstellt oder ein zweites Signal, das die eine Bremswirkung betreffende genannte Information darstellt,
und wobei die genannte Anzeigevorrichtung (107) und die genannte Signalvorrichtung (108) darauf ausgelegt sind, Lichtstrahlung als Bestätigung, jeweils das genannte erste und das genannte zweite Signal erhalten zu haben, auszusenden.

9. Fahrrad nach Anspruch 8, bei dem das Steuergerät (8) ein Modul zur Auswertung der Fahrradmanövrierung umfasst, das darauf ausgelegt ist, Signale von dem ersten Sensorelement (6) und von der inertialen Messeinheit (13) zu erhalten und diese zum Zweck des Erhalts der genannten Informationen bezüglich einer Bremswirkung oder eines Abbiegens des Fahrrads (100), die während einer longitudinalen Bewegung des Fahrrades (100) erfolgt sind, zu verarbeiten.

10. Fahrrad nach Anspruch 8 oder 9, bei dem der Gehäusekörper (4) eine einzige Stromversorgungsschnittstelle (14) umfasst, die geeignet ist, um der Strom der daran angeschlossenen externen Lasten zu sorgen.

11. Fahrrad nach einem beliebigen der Ansprüche 8 bis 10, bei dem die Steuervorrichtung (1) einen mit dem genannten Steuergerät (8) verbundenen Datenkommunikationskanal (15) umfasst, der dazu eingerichtet ist, das jeweilige erste oder zweite Signal an die genannte Anzeigevorrichtung (107) und an die genannte Signalvorrichtung (108) zu senden.

12. Fahrrad nach Anspruch 10 und 11, bei dem die Stromversorgungsschnittstelle (14) und der Kommunikationskanal (15) in einem einzigen ummantelten Kabel (16) untergebracht sind, das von der genannten Mittelachse des Gehäusekörpers (4) ausgeht.

13. Fahrrad nach Anspruch 12, bei dem das genannte ummantelte Kabel (16) die einzige elektrische und/oder elektronische Schnittstelle ist, die außerhalb des Gehäusekörpers (4) der Steuervorrichtung (1) zugänglich ist.

14. System zur gemeinsamen Nutzung von Fahrrädern, umfassend:
- mindestens eine elektronische Vorrichtung (500), die mit einem Benutzer verknüpft werden kann;
- eine Vielzahl von pedalgestützten Fahrrädern, die mit einem mit einem Rad (102) verbundenen Elektromotor (2), mindestens einem mit dem genannten Motor (2) verbundenen Akkupaket (3), um bidirektional Energie mit dem Motor auszutauschen, einer Pedal-Schubgruppe (103), einer Übersetzung (104), die operativ zwischen der genannten Pedal-Schubgruppe (103) und mindestens einem Rad (102) eingefügt ist, und einem Freilaufmechanismus (105), der mit dem genannten mindestens einen Rad (102) verbunden ist, ausgestattet sind,
wobei die genannte elektronische Vorrichtung (500) und die genannten Fahrräder (100) miteinander mittels eines Cloud-Computing-Systems (1001) verbunden sind;
**dadurch gekennzeichnet, dass** jedes Fahrrad (100) mit einer Steuervorrichtung (1) nach einem beliebigen der vorangegangenen Ansprüche ausgestattet ist und mit einem Benutzer über die genannte elektronische Vorrichtung (500) verknüpft werden kann.

15. System zur gemeinsamen Nutzung von Fahrrädern nach Anspruch 14, bei dem das Steuergerät (8) jeder Steuervorrichtung (1) darauf ausgelegt ist, den Diebstahlsicherungsmodus zu aktivieren, wenn die Steuervorrichtung (1) von allen elektronischen Vorrichtungen (500) getrennt ist.

## Revendications

1. Dispositif de commande d'une bicyclette à pédalage assisté (100) comprenant un groupe de poussée de pédale (103), une transmission (104) interposée fonctionnellement entre ledit groupe de poussée de pédale (103) et au moins une roue (102) et un mécanisme de roue libre (105) associé à ladite au moins une roue (102), ledit dispositif de commande comprenant :
- un moteur électrique (2) associé à une roue (2) de la bicyclette (100) ;
- au moins un bloc-batterie (3) associé audit moteur (2) de façon à échanger bidirectionnellement de l'énergie avec celui-ci ;
- des premiers moyens de détection (6) configurés pour détecter au moins une quantité correspondant à la vitesse d'une roue (102) de la bicyclette et pour générer un ou plusieurs signaux représentatifs de cette au moins une quantité ;
- au moins une unité de commande (8) associée auxdits premiers moyens de détection (6) et audit moteur (2) et configurée pour entraîner le moteur électrique (2) au moins selon une modalité de fonctionnement, dans laquelle il agit comme un actionneur ou générateur en fonction de la vitesse angulaire de la route (102) ;
dans lequel ladite unité de commande (8) est configurée en outre pour entraîner le moteur électrique (2) selon une modalité antivol, dans laquelle ledit moteur (2) confère un couple opposé à une direction de rotation de la roue (102) détectée par les premiers moyens de détection (6),
et dans lequel, dans la modalité antivol, l'unité de commande (8) est configurée pour entraîner le moteur (2) alternativement dans une configuration passive, dans laquelle le moteur (2) ne requiert pas d'énergie du bloc-batterie (3), ou dans une configuration active, dans laquelle il confère ledit couple opposé à une direction de rotation de la roue (102) et requiert de l'énergie du bloc-batterie (3),
**caractérisé en ce que**, en modalité antivol, l'unité de commande (8) est configurée pour entraîner le moteur (2) dans la configuration passive sous une limitation de vitesse préétablie pour la bicyclette (100) et pour entraîner le moteur (2) dans la configuration active au-dessus de ladite limitation de vitesse.

2. Dispositif de commande selon la revendication 1, **caractérisé en ce que** ledit moteur électrique peut être entraîné dans :
un premier mode, dans lequel le moteur (2) fournit un couple conforme à la direction de rotation de la roue (102),
un second mode, dans lequel la rotation de la roue (102) détermine un transfert de courant du moteur (2) au bloc-batterie (3),
un troisième mode, dans lequel le moteur (2) est sensiblement en court-circuit de façon à fournir un couple résistant à la roue qui est proportionnel à la vitesse de rotation de la roue,
un quatrième mode, dans lequel le moteur (2) confère ledit couple en sens inverse par rapport à la direction de rotation de la roue (102).

3. Dispositif selon la revendication 2, caractérisé en ce, dans la configuration active de la modalité antivol, l'unité de commande (8) entraîne le moteur électrique (2) dans le quatrième mode.

4. Dispositif selon la revendication 2 ou 3, caractérisé en ce, dans la configuration passive de la modalité antivol, l'unité de commande (8) entraîne le moteur électrique (2) dans le second et troisième mode, avec une prévalence dudit troisième mode.

5. Dispositif de commande selon l'une quelconque des revendications précédentes, **caractérisé en ce que** lesdits premiers moyens de détection (6) comprennent en outre une unité de mesure inertielle qui est appropriée pour mesurer au moins une accélération de la bicyclette et pour générer des signaux représentatifs de cette accélération ; dans la modalité antivol, ladite unité de commande (8) étant configurée pour :
détecter une situation dangereuse lorsque ledit signal représentatif de ladite au moins une accélération dépasse une valeur seuil donnée ;
envoyer un signal d'alarme aux moyens pour générer des bruits et/ou éléments visuels lors de la détection de ladite situation dangereuse.

6. Dispositif de commande selon l'une quelconque des revendications précédentes, dans lequel l'unité de commande (8) est configurée pour activer la modalité antivol de manière indépendante, en réponse à un signal représentatif d'un état dans lequel la bicyclette est stationnée.

7. Bicyclette à pédalage assisté comprenant :
- un cadre (101) ;
- au moins une roue (102) ;
- un dispositif de commande (1) selon l'une quelconque des revendications précédentes, comprenant un corps de confinement (4) relié à au moins une roue (102) de la bicyclette de sorte qu'un axe central (A) du corps de confinement (4) corresponde à un axe de rotation de la roue (102) ;
- une machine ou moteur électrique (2) logée dans ledit corps de confinement (4) ;
- un bloc-batterie (3) logé dans ledit corps de confinement (4) et associé à ladite machine électrique (2) de façon à échanger de l'énergie avec celle-ci.

8. Bicyclette selon la revendication 7, **caractérisé en ce que** ledit dispositif de commande (1) comprend :
- une unité de mesure inertielle (13) logée dans ledit corps de confinement (4) et configurée pour mesurer une ou plusieurs accélérations et une ou plusieurs vitesses angulaires de la bicyclette et pour générer des signaux représentatifs de celles-ci ; ladite unité de commande (8) étant logée dans ledit corps de confinement (4) et associée à ladite unité de mesure inertielle (13) ;
- au moins un dispositif indicateur (107) pour indiquer un virage et/ou un dispositif de signalisation de freinage (108) pour signaler le freinage de la part du cycliste, tous les deux étant liés audit cadre (101) ;
dans laquelle ladite unité de commande (8) est configurée pour
recevoir les signaux respectifs desdits premiers moyens de détection (6) et de ladite unité de mesure inertielle (13) ;
traiter lesdits signaux dans le but d'obtenir au moins une partie d'information concernant une action de freinage ou le virage de la bicyclette (100) qui a eu lieu pendant le mouvement longitudinal de la bicyclette (100) ;
envoyer audit dispositif indicateur (107) ou audit dispositif de signalisation (108) un premier signal représentatif de ladite information concernant un virage ou un second signal représentatif de ladite information concernant une action de freinage,
et dans laquelle ledit dispositif indicateur (107) et ledit dispositif de signalisation (108) sont configurés pour émettre un rayonnement lumineux en réponse à la réception, respectivement, dudit premier et dudit second signal.

9. Bicyclette selon la revendication 8, dans laquelle l'unité de commande (8) comprend un module pour interpréter le manœuvrage de la bicyclette qui est configuré pour recevoir des signaux desdits premiers moyens de détection (6) et de l'unité de mesure inertielle (13) et pour les traiter dans le but d'obtenir ladite information concernant une action de freinage ou le virage de la bicyclette (100) qui a eu lieu pendant le mouvement longitudinal de la bicyclette (100).

10. Bicyclette selon la revendication 8 ou 9, dans laquelle le corps de confinement (4) comprend une seule interface de puissance (14) apte à prévoir l'alimentation de charges externes reliées à celle-ci.

11. Bicyclette selon l'une quelconque des revendications 8 à 10, dans laquelle le dispositif de commande (1) comprend un canal de communication de données (15) associé à ladite unité de commande (8) et agencé de façon à envoyer le premier ou second signal respectifs audit dispositif indicateur (107) et audit dispositif de signalisation (108).

12. Bicyclette selon les revendications 10 et 11, dans laquelle l'interface de puissance (14) et le canal de communication (15) sont logés dans un seul câble sous gaine (16) qui s'éloigne dudit axe central (A) du corps de confinement (4).

13. Bicyclette selon la revendication 12, dans laquelle ledit câble sous gaine (16) est la seule interface électrique et/ou électronique qui est accessible à l'extérieur du corps de confinement (4) du dispositif de commande (1).

14. Système de partage de vélos, comprenant :
- au moins un dispositif électronique (500) qui peut être associé à un utilisateur ;
- une pluralité de bicyclettes à pédalage assisté équipées d'un moteur électrique (2) associé à une roue (102), au moins un bloc-batterie (3) associé audit moteur (2) de façon à échanger bidirectionnellement de l'énergie avec le moteur, un groupe de poussée de pédale (103), une transmission (104) qui est fonctionnellement interposée entre ledit groupe de poussée de pédale (103) et au moins une roue (102), et un mécanisme de roue libre (105) qui est associé à ladite au moins une roue (102),
dans lequel ledit dispositif électronique (500) et lesdites bicyclettes (100) sont interconnectés les uns aux autres par l'intermédiaire d'un système d'informatique en nuage (1001) ;
**caractérisé en ce que** chaque bicyclette (100) est équipée d'un dispositif de commande (1) selon l'une quelconque des revendications précédentes et peut être associée à un utilisateur à travers ledit dispositif électronique (500).

15. Système de partage de vélos selon la revendication 14, dans lequel l'unité de commande (8) de chaque dispositif de commande (1) est configurée pour activer le mode antivol lorsque le dispositif de commande (1) est déconnecté de tous les dispositifs électroniques (500).
